# EUROPEAN PATENT APPLICATION

(11) **EP 4 765 677 A1**
(43) Date of publication of application: **24.06.2026**
(21) Application number: 24220583.9
(22) Date of filing: 17.12.2024
(51) Int. Cl.: H04B 10/112, H04B 10/118, H04B 10/70

(54) **POLARISATION-PRESERVING SPACE-TO-FIBER CONNECTION**

(71) Applicant: Nederlandse Organisatie voor Toegepast-Natuurwetenschappelijk Onderzoek TNO, 2595 DA 's-Gravenhage (NL)
(72) Inventor: The designation of the inventor has not yet been filed
(74) Representative: Nederlandsch Octrooibureau

(57) **Abstract**

An optical transmitter comprising an active optical device configured to generate a linearly polarized optical signal, a quarter wave plate, a first polarization maintaining optical fiber, and a beam expander configured to transmit a circularly polarized optical signal, wherein the first polarization maintaining optical fiber is configured to pass the linearly polarized optical signal generated by the active optical device to the quarter wave plate and the quarter wave plate is configured to convert the linearly polarized optical signal into the circularly polarized optical signal; or the quarter wave plate is configured to convert the linearly polarized optical signal generated by the active optical device into the circularly polarized optical signal and the first polarization maintaining optical fiber is configured to pass the circularly polarized optical signal to the beam expander.

## Description

### FIELD OF THE INVENTION

The invention relates to an optical detector, an optical receiver and corresponding methods for optical communication.

### BACKGROUND OF THE INVENTION

The problem area is optical communication with space, and more specifically quantum communication with space. Polarisation is usually not relevant in optical communication with space, as direct-detection photodetectors are insensitive to polarisation. However, polarisation is highly relevant to quantum communication. For example, Bell State Measurements (BSM) on photon pairs require polarisation-alignment photons. Also, most forms of Quantum Key Distribution (QKD) are sensitive to polarisation.

"Real-time polarization compensation method in quantum communication based on channel Muller parameters detection", by Yongjian Tan, Jianyu Wang, Jincai Wu & Zhiping He, Communication Engineering 3, 57 (2024), discloses a system using a motor-controlled half-wave plate (HWP) to compensate for orientation changes between the ground station and the satellite and it uses an active polarisation controller to compensate for atmospheric effects that change the polarisation.

"Polarization-maintaining design for satellite-based quantum communication terminals" by Jincai Wu, Liang Zhang, Jianjun Jia, Tianhong Wang, Rong Shu, Zhiping He, And Jianyu Wang, Optics Express, vol.28, no.3, 13 April 2020, discloses how to deal with polarization changes caused by the different system components including how to design of coatings for mirrors or using active polarisation compensation with motorized waveplates.

"Reference frame independent quantum key distribution", by Anthony Laing, Valerio Scarani, John G. Rarity, and Jeremy L. O'Brien, Phys. Rev. A 82, 012304 - July 2010, discloses applying a well-known technique from the microwave domain to the photonic quantum domain, namely using circular polarisation between satellite and ground station to achieve orientation independence.

"Hybrid BBM92 approach for GEOQKD - lab implementation and future perspectives", by Bob Dirks, Gustavo Castro do Amaral, et al, ICSO 2022, International Conference on Space Optics, Dubrovnik, Croatia, 3-7 October 2022, discloses using circular polarisation in free space, and a quarter-wave plate to convert between linear and circular polarisation.

### SUMMARY OF THE INVENTION

According to a first aspect of the invention, it is provided an optical transmitter comprising an active optical device configured to generate a linearly polarized optical signal, a quarter wave plate, a first polarization maintaining optical fiber, and a beam expander configured to transmit a circularly polarized optical signal, wherein:
- the first polarization maintaining optical fiber is configured to pass the linearly polarized optical signal generated by the active optical device to the quarter wave plate and the quarter wave plate is configured to convert the linearly polarized optical signal into the circularly polarized optical signal; or
- the quarter wave plate is configured to convert the linearly polarized optical signal generated by the active optical device into the circularly polarized optical signal and the first polarization maintaining optical fiber is configured to pass the circularly polarized optical signal to the beam expander.

This allows to place the equipment at a certain distance from the beam expander, as usually space close to the beam expander is scarce, while still transmitting a signal generated with a linear polarization through the atmosphere using a circular polarization. For instance, a telescope used as the beam expander may be shared with other applications and other equipment for said applications might be needed for that.. By using circular polarization through the atmosphere, the transmission can deal with changes in the orientation of the receiver. The linear polarization is associated with signals generated for a wide range of applications, such as some kind of quantum encoding techniques. The first polarization maintaining optical fiber together with the quarter wave plate allows that the beam expander and the active optical device can be separated, thereby saving space and weight closed to the beam expander. This is especially relevant for a wide range of applications such as when the beam expander is located in a satellite.

For instance, when using certain quantum encoding techniques, such as time-bin encoding of the photons, only a single polarisation is needed, while still enabling many quantum interactions actions, including QKD and BSM. Thus, said quantum encoding techniques can benefit from the described invention.

The linearly polarized optical signal generated by the active optical device can pass without polarization changes by the first polarization maintaining optical fiber and the quarter wave plate can change the polarization from linear to circular before being transmitted by the beam expander. In this case, the first polarization maintaining optical fiber is configured to maintain linear polarizations. For instance, the first polarization maintaining optical fiber may be a single-polarization type or a birefringent fiber type. The single-polarization type is characterized by a large transmission loss difference between the two polarizations of the fundamental mode. And the birefringent fiber type is such that the propagation constants between the two polarizations of the fundamental mode are significantly different. Linear polarization may be maintained using any other known fiber design.

Alternatively, the linearly polarized optical signal generated by the active optical device can go first though the quarter wave plate such that is received at the first polarization maintaining optical fiber already with a circular polarization and, after that, transmitted by the beam expander. In this case, the first polarization maintaining optical fiber is configured to maintain circular polarizations. The first polarization maintaining optical fiber configured to maintain circular polarizations might be obtained by introducing circular-birefringence in a fiber. For instance, a round (axially symmetrical) fiber may be twisted to produce a difference between the propagation constants of the clockwise and counterclockwise circularly polarized fundamental modes such that these two circular polarization modes are decoupled. Alternatively, external stress whose direction varies azimuthally along the fiber length may be applied, thereby causing circular-birefringence in the fiber. The first polarization maintaining optical fiber configured to maintain circular polarizations might be obtained in any other suitable way.

As said, active polarisation controllers are conventionally used to assure aligned polarisation (manual or automated in operational use) align polarisation for standard optical fibers, and satellite orientation towards the ground station. However, active polarisation controllers have a hight cost (investment, powering), size and weight (especially when implemented into a satellite or behind a telescope mirror), and need a pilot calibration signal given the quantum-communication power levels. This is avoided by using the first polarization maintaining optical fiber in combination with the quarter wave plate in combination with a single-polarisation quantum-communication signal.

Also as said, getting optical signals from and to a beam expander such as a telescope, either part of a ground station or a satellite by placing the active optical equipment directly on the telescope has all kinds of operational complexities (weight, size, powering, ...). This is avoided by using the first polarization maintaining optical fiber in combination with the quarter wave plate.

According to a second aspect of the invention, it is provided an optical receiver comprising a beam expander configured to receive a circularly polarized optical signal, a quarter wave plate, a first polarization maintaining optical fiber, and an active optical device configured to process a linearly polarized optical signal, wherein:
- the quarter wave plate is configured to convert the circularly polarized optical signal received by the beam expander into the linearly polarized optical signal and the first polarization maintaining optical fiber is configured to pass the linearly polarized optical signal to the active optical device; or
- the first polarization maintaining optical fiber is configured to pass the circularly polarized optical signal received by the beam expander to the quarter wave plate and the quarter wave plate is configured to convert the circularly polarized optical signal into the linearly polarized optical signal.

The first polarization maintaining optical fiber may be a first birefringent optical fiber configure to transmit two modes for the case of a first polarization maintaining optical fiber that needs to maintain linear polarization. This provides an efficient way of manufacturing the first polarization maintaining optical fiber.

The optical device may comprise a first polarization filter configured to filter from the linearly polarized optical signal one of the two modes of the birefringent optical fiber. If the polarization preserving fiber is standard birefringent fiber, and a polarization filter is used to filter out one of the optical modes. This way, polarization crosstalk, e.g. due to atmospheric effects or non-perfect beam expanders (telescope) or quarter wave plates (QWP), is isolated from the active optical equipment.

The optical transmitter may comprise a second polarization filter connected to the beam expander and configured to filter from the circular polarized optical signal the one of the two modes.

The active optical device may comprise a polarization beam splitter configured to combine the linearly polarized optical signal into the two modes of the birefringent optical fiber. The polarization beam splitter may also be configured to split the linearly polarized optical signal into the two modes of the birefringent optical fiber.

The quarter wave plate may be a second optical birefringent fiber spliced at 45 degrees to the first polarization maintaining optical fiber. The length of the second birefringent fiber may be such that the second optical birefringent fiber functions as the quarter wave plate.

A length of the first polarization maintaining optical fiber may be between one meter and 400 meters.

The quarter wave plate may be connected to the beam expander.

The active optical device may comprise one or more laser lights, and/or one or more optical amplifiers and/or one or more optical detectors and/or one or more single-photon detectors.

According to another aspect of the invention, a ground station or a satellite or a terrestrial optical free-space communication link comprising the optical transmitter and/or the optical receiver as described above.

According to a further aspect of the invention, it is provided an optical receiving method, comprising the steps of:
I. receive, by a beam expander, a circularly polarized optical signal; and
II.
   a) convert, by a quarter wave plate, the circularly polarized optical signal into a linearly polarized optical signal and pass, by a first polarization maintaining optical fiber, the linearly polarized optical signal from the quarter wave plate to the active optical device; or
   b) pass, by the first polarization maintaining optical fiber, the circularly polarized optical signal to the quarter wave plate and convert, by the quarter wave plate, the circularly polarized optical signal into the linearly polarized optical signal.

According to a further aspect of the invention, it is provided an optical transmitting method, comprising the steps of:
I. generate, by an active optical device, a linearly polarized optical signal;
II.
   a) pass, by a first polarization maintaining optical fiber connected to the active optical device and to a quarter wave plate, the linearly polarized optical signal generated by the active optical device to the quarter wave plate, and convert (306), by the quarter wave plate, the linearly polarized optical signal into circularly polarized optical signal;
      or
   b) convert, by the quarter wave plate, the linearly polarized optical signal into the circularly polarized optical signal and pass, by the first polarization maintaining optical fiber, the circularly polarized optical signal to a beam expander; and
III. transmit, by beam expander, the circularly polarized optical signal.

### BRIEF DESCRIPTION OF THE DRAWINGS

The invention will be described further with respect to embodiments shown in the drawings.
FIG. 1A shows schematically an optical transmitter according to an embodiment of the disclosure.
FIG. 1B shows schematically an optical transmitter according to another embodiment of the disclosure.
FIG. 2A shows schematically an optical receiver according to an embodiment of the disclosure.
FIG. 2B shows schematically an optical receiver according to another embodiment of the disclosure.
Fig. 3A shows a flowchart of an optical transmitting method according to an embodiment of the invention.
Fig. 3B shows a flowchart of an optical transmitting method according to another embodiment of the invention.
Fig. 4A shows a flowchart of an optical receiving method according to an embodiment of the invention.
Fig. 4B shows a flowchart of an optical receiving method according to another embodiment of the invention.

### DESCRIPTION

The following is a description of certain embodiments of the invention, given by way of example only and with reference to the figures. It is also to be understood that the terminology used herein is for the purpose of describing particular aspects only and is not intended to be limiting.

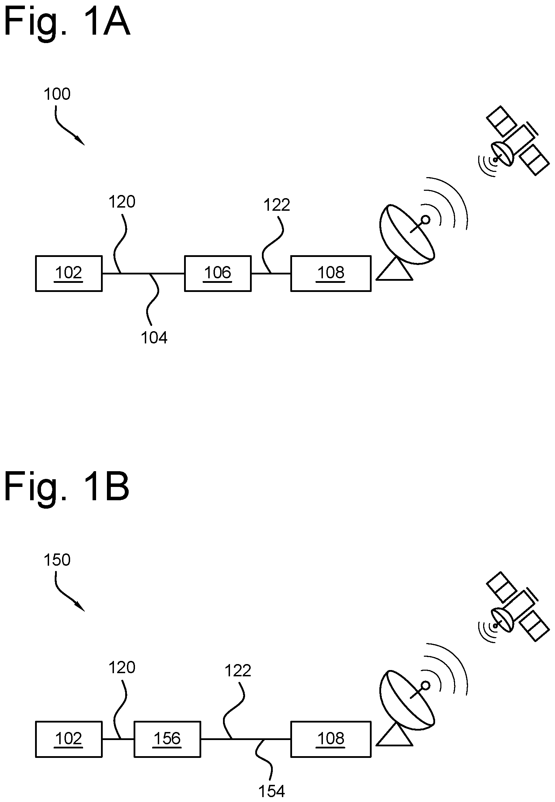

FIG. 1A shows schematically an optical transmitter according to an embodiment of the disclosure.

The optical transmitter 100 of Fig. 1A comprises an active optical device 102, a quarter wave plate 106, a first polarization maintaining optical fiber 104 and a beam expander 108. The active optical device 102 of Fig. 1A is connected to the first polarization maintaining optical fiber 104, the first polarization maintaining optical fiber 104 is connected to the quarter wave plate 106 and the quarter wave plate 106 is connected to the beam expander 108. In this way, a linearly polarized optical signal 120 generated by the optical device 102 passes through the first polarization maintaining optical fiber 104 (which preserves the polarization of said linearly polarized optical signal 120) and is received at the quarter wave plate 106 which converts the linearly polarized optical signal 120 into the circularly polarized optical signal 122. Finally, the beam expander 108 transmits said circularly polarized optical signal 122.

The first polarization maintaining optical fiber 104 of Fig. 1A can be a first birefringent optical fiber configured to transmit two modes. In that case, and optionally, the active optical device 102 of Fig. 1A may comprise a first polarization filter configured to filter from the linearly polarized optical signal one of the two modes of the birefringent optical fiber 104. Furthermore, the optical transmitter may comprise a second polarization filter (not shown) connected to the beam expander 108 of Fig. 1A and configured to filter from the circular polarized optical signal 122 the one of the two modes of the birefringent optical fiber 104.

Also, when the first polarization maintaining optical fiber 104 of Fig. 1A is a first birefringent optical fiber configured to transmit two modes, the active optical device 102 may comprise a polarization beam splitter (not shown) configured to combine and/or split the linearly polarized optical signal into the two modes of the birefringent optical fiber 104.

FIG. 1B shows schematically an optical transmitter according to another embodiment of the disclosure. Same reference numbers as in previous Fig. 1A have been used for indicating same or similar elements.

The optical transmitter 150 of Fig. 1B comprises an active optical device 102, a quarter wave plate 156, a first polarization maintaining optical fiber 154 and a beam expander 108. The active optical device 102 of Fig. 1B is configured to generate a linearly polarized optical signal 120. The beam expander 108 of Fig. 1B is configured to transmit a circularly polarized optical signal 122.

In the optical transmitter 150 of Fig. 1B, the active optical device 102 is connected to the quarter wave plate 156, the quarter wave plate 156 is connected to the first polarization maintaining optical fiber 154, and the first polarization maintaining optical fiber 154 is connected to the beam expander 108. The quarter wave plate 156 of Fig. 1B is configured to convert the linearly polarized optical signal 120 generated by the active optical device 102 into the circularly polarized optical signal 122. The first polarization maintaining optical fiber 154 of Fig. 1B is configured to pass the circularly polarized optical signal 122 to the beam expander 108 while preserving polarization of said circularly polarized optical signal 122.

Thus, in Fig. 1B, the optical device 102 generates the linearly polarized optical signal 120, the quarter wave plate 156 converts the linearly polarized optical signal 120 generated by the optical device 102 into the circularly polarized optical signal 122, and the first polarization maintaining optical fiber 154 passes the circularly polarized optical signal 122. Finally, the beam expander 108 of Fig. 1B transmits said circularly polarized optical signal 122.

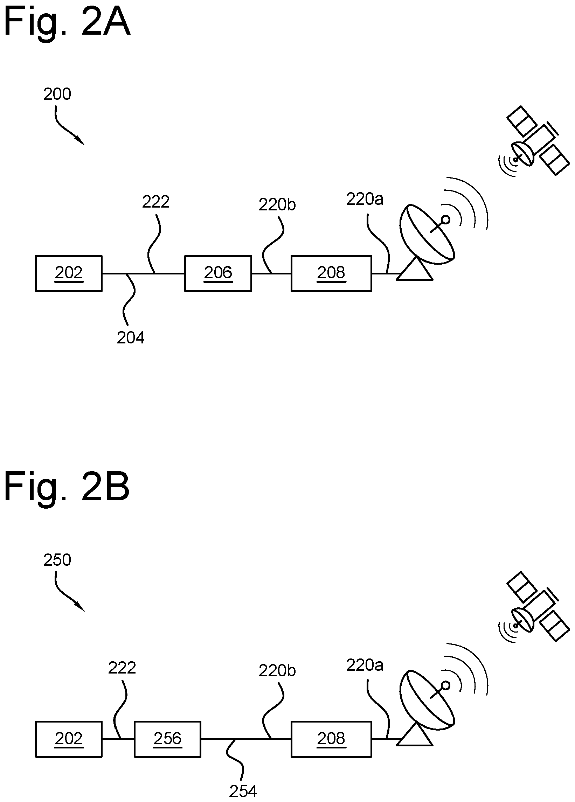

FIG. 2A shows schematically an optical receiver according to an embodiment of the disclosure.

The optical receiver 200 of Fig. 2A comprises a beam expander 208 configured to receive a circularly polarized optical signal 220a, a quarter wave plate 206, a first polarization maintaining optical fiber 204 and an active optical device 202 configured to process a linearly polarized optical signal 222.

The beam expander 208 of Fig. 2A is connected to the quarter wave plate 206, the quarter wave plate 206 is connected to the first polarization maintaining optical fiber 204, and the first polarization maintaining optical fiber 204 is connected to the active optical device 202. In this way, the beam expander 208 receives a circularly polarized optical signal 220a transmitted through the atmosphere and, possibly after some processing, sends circularly polarized optical signal 220b, the quarter wave plate 206 converts the circularly polarized optical signal 220b into the linearly polarized optical signal 222, and the first polarization maintaining optical fiber 204 passes the linearly polarized optical signal 222 from the quarter wave plate 206 to the active optical device 202. The active optical device 202 process then the linearly polarized optical signal 222

The first polarization maintaining optical fiber 204 of Fig. 2A can be a first birefringent optical fiber configured to transmit two modes. In that case, and optionally, the active optical device 202 of Fig. 2A may comprise a first polarization filter (not shown) configured to filter from the linearly polarized optical signal 222 one of the two modes of the birefringent optical fiber 204. Furthermore, the active optical device 202 of Fig. 2A may comprise a second polarization filter (not shown) connected to the beam expander 208 of Fig. 2A and configured to filter from the circular polarized optical signal 222a the one of the two modes of the birefringent optical fiber 204.

Also, when the first polarization maintaining optical fiber 204 of Fig. 2A is a first birefringent optical fiber configured to transmit two modes, the active optical device 202 may comprise a polarization beam splitter (not shown) configured to combine and/or split the linearly polarized optical signal 222 into the two modes of the birefringent optical fiber 204.

FIG. 2B shows schematically an optical receiver according to another embodiment of the disclosure. Same reference numbers as in previous Fig. 2A have been used for indicating same or similar elements. The optical receiver 250 of Fig. 2B comprises a beam expander 208 configured to receive a circularly polarized optical signal 220, a first polarization maintaining optical fiber 254, a quarter wave plate 256 and an active optical device 202 configured to process a linearly polarized optical signal 222.

The beam expander 208 of Fig. 2B is connected to the first polarization maintaining optical fiber 254, the first polarization maintaining optical fiber 254 is connected to the quarter wave plate 256 and the quarter wave plate 256 is connected to the active optical device 202. In this way, the beam expander 208 receives the circularly polarized optical signal 220a at its input, the first polarization maintaining optical fiber 254 passes the circularly polarized optical signal 220b (received from the beam expander 208) to the quarter wave plate 256, and the quarter wave plate 256 converts the circularly polarized optical signal 220b into the linearly polarized optical signal 222. Finally, the active optical device 202 process the linearly polarized optical signal 222.

The quarter wave plate 106 of Fig. 1A may be a second optical birefringent fiber that is spliced at 45 degrees with respect to the first polarization maintaining optical fiber 104. In this case, the length of the second birefringent fiber forming the quarter wave plate 106 is such that the second optical birefringent fiber functions as the quarter wave plate.

The length of the first polarization maintaining optical fiber may be between one meter and 400 meters.

The active optical device may comprise one or more laser lights and/or one or more optical amplifiers and/or one or more optical detectors and/or one or more single-photon detectors.

The optical transmitter of any of Figs. 1A and 1B may be part of a ground station or a satellite or a terrestrial optical free-space communication link. Also, the optical receiver of any of Figs. 2A and 2B may be part of a ground station or a satellite or a terrestrial optical free-space communication link. Any of the optical transmitter of Figs. 1A and 1B or any of the optical receivers of Figs. 2A and 2B may be an optical transceiver configured to both transmit and receive in the same way as explained with regard to Figs. 1A, 1B, 2A and 2B.

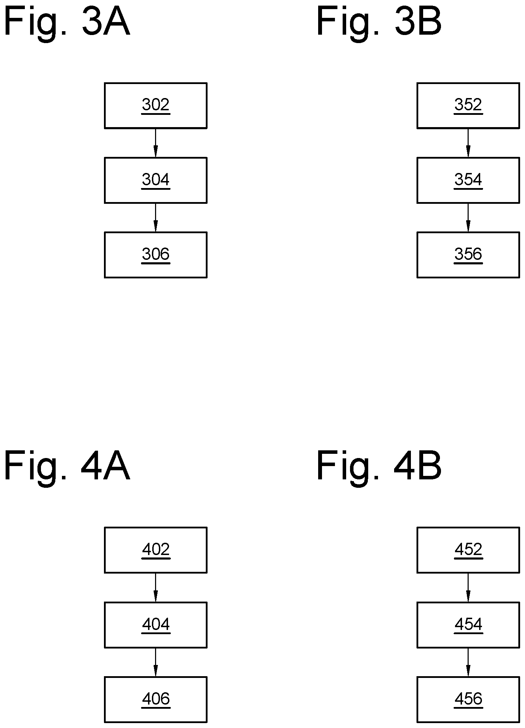

Fig. 3A shows a flow chart of an optical transmitting method according to an embodiment of the invention. The method of Fig. 3A may be performed by the optical transmitter 100 of Fig. 1A. The optical transmitting method of Fig. 3A comprise a first step 302 wherein the active optical device 102 generates a linearly polarized optical signal 120. In step 304 of the method of Fig. 3A, the first polarization maintaining optical fiber 104 that is connected between the active optical device 102 and the quarter wave plate 106 passes the linearly polarized optical signal 120 generated by the active optical device 102 to the quarter wave plate 106, and the quarter wave plate 106 converts the linearly polarized optical signal into the circularly polarized optical signal 122. Finally, in step 306 of the method of Fig. 3A, the beam expander 108 transmits the circularly polarized optical signal 122 through the atmosphere.

Fig. 3B shows a flow chart of an optical transmitting method according to another embodiment of the invention. The method of Fig. 3B may be performed by the optical transmitter 150 of Fig. 1B. The optical transmitting method of Fig. 3B comprise a first step 352 wherein the active optical device 102 generates a linearly polarized optical signal 120. In step 354 of the method of Fig. 3A, the quarter wave plate 156 that is connected between the active optical device 102 and the polarization maintaining optical fiber 154 converts the linearly polarized optical signal 120 generated by the active optical device 102 into the circularly polarized optical signal 122 and the polarization maintaining optical fiber 154 passes the circularly polarized optical signal 122 converted by quarter wave plate 156 to the beam expander 108. Finally, in step 356 of the method of Fig. 3B, the beam expander 108 transmits the circularly polarized optical signal 122 through the atmosphere.

Fig. 4A shows a flow chart of an optical receiving method according to an embodiment of the invention. The method of Fig. 4A may be performed by the optical receiver 200 of Fig. 2A. The optical receiving method of Fig. 4A comprises a first step 402 wherein the beam expander 208 receives a circularly polarized optical signal 220. In step 404 of the method of Fig. 4A, the quarter wave plate 206 that is connected between the beam expander 208 and the polarization maintaining optical fiber 204 converts the circularly polarized optical signal 220 into the linearly polarized optical signal 222. In step 406, the polarization maintaining optical fiber 204 passes the linearly polarized optical signal 222 converted by quarter wave plate 206 to the active optical device 102.

Fig. 4B shows a flow chart of an optical receiving method according to another embodiment of the invention. The method of Fig. 4B may be performed by the optical receiver 250 of Fig. 2B. The optical receiving method of Fig. 4B comprises a first step 452 wherein the beam expander 208 receives a circularly polarized optical signal 220. In step 454 of the method of Fig. 4B, the polarization maintaining optical fiber 254 passes the circularly polarized optical signal 220 to the quarter wave plate 256. In step 406, the quarter wave plate 256 that is connected between the polarization maintaining optical fiber 254 and the active optical device 202 converts the circularly polarized optical signal 220 into the linearly polarized optical signal 222 which is received by the active optical device 102 for further processing.

This allows to eliminate active polarization control by using polarization-preserving fiber and a quarter wave plate, thereby reducing weight and power consumption in the transmitter/receiver, while still using linear polarization at the active optical equipment, whereas circular polarization is used between ground and space, or between two satellites in space. Circular polarization is insensitive to the orientation of the satellite towards the ground station, or towards another satellite. The QWP, oriented at 45 degrees with the polarization-maintaining fiber, converts linear polarization into circular polarization, and vice versa. That is, the quarter wave plate converts incident linearly polarized light to circularly polarized light or incident circularly polarized light to linearly polarized light. The technical benefit of the whole is that polarisation controllers are no longer needed. This saves cost, size and weight, and eliminates any optical losses associated with active polarization control.

In an embodiment, the polarization preserving fiber is standard birefringent fiber, and a polarisation filter is used to filter out one of the optical modes. The technical benefit is that any polarisation crosstalk, e.g. through atmospheric effects or a non-perfect telescope or QWP, is isolated from the active optical equipment.

In an embodiment, the length of the polarization-preserving fiber may as short as a few meters, up to a few hundred. The active optical equipment may be housed in a building close to the ground station, or in a different part of the satellite, so only a short length is typically needed. Therefore, any additional losses, compared to standard non-polarization-preserving single-mode fiber, remain limited.

In an embodiment, the quarter wave plate is a short piece of birefringent optical fiber, spliced at 45 degrees to the polarization-maintaining fiber. As the beat length of birefringent fiber may be a few centimeters or even only a few millimeters, and only a quarter of a beat length is needed, the piece will be very short. The technical benefit is further compactness.

In an embodiment, a polarization beam splitter may replace the polarization filter at the active optical device 208 and/or at the first polarization maintaining fiber. This enables polarisation multiplexing, e.g. for doubling the capacity of the system, or for supporting ground-to-space and space-to-ground quantum communication in a single system.

In an embodiment, any of the optical transmitters of Figs. 1A and 1B and/or any of the optical receivers of Figs. 2A and 2B may be implemented in a ground station, pointing at a satellite.

In another embodiment, any of the optical transmitters of Figs. 1A and 1B and/or any of the optical receivers of Figs. 2A and 2B may be implemented in satellite, pointing at a ground station.

In a further embodiment, any of the optical transmitters of Figs. 1A and 1B and/or any of the optical receivers of Figs. 2A and 2B may be implemented in satellite, pointing at another satellite.

Furthermore, any of the optical transmitters of Figs. 1A and 1B and/or any of the optical receivers of Figs. 2A and 2B may be implemented in a terrestrial optical free-space communication link, to make it technically compatible with ground-station and satellite implementations.

The active optical device 102 of Fig. 1A and/or the active optical device 152 of Fig. 1B may be a receiver for time-bin encoded qubits. Furthermore, the active optical device 102 of Fig. 1A or the active optical device 152 of Fig. 1B may comprise a.o. circuitry to convert time-bin encoding into polarization encoding, or any suitable processing circuitry.

Furthermore, the active optical device 102 of Fig. 1A and/or the active optical device 152 of Fig. 1B may comprise among others passive optical components such as beam splitters, retarders, or any other suitable component and/or active optical components such as optical switches, optical modulators, lasers for heterodyne detection, or any other suitable component.

For instance, the active optical device 102 of Fig. 1A or the active optical device 152 of Fig. 1B may comprise among others. single-photon detector(s) and/or a time-tagger

Furthermore, the active optical device 102 of Fig. 1A or the active optical device 152 of Fig. 1B may be equipped to perform a Bell-state measurement between two optical inputs.

The active optical device 202 of Fig. 2A and/or the active optical device 252 of Fig. 2B may comprise a transmitter for time-bin encoded qubits. In an embodiment, this transmitter may comprise an entangled photon source or a single photon source. In addition, or alternatively, this transmitter may comprise passive optical components such as beam splitters, retarders, and/or any other suitable component and/or may comprise active optical components such as optical switches, optical modulators, and/or any other suitable component.

In an embodiment, light-matter entanglement is generated at the active optical device of any of Figs. 1A, 1B, 2A and 2B by resonantly driving the transition of a colour-center initialized in a superposition of radiative and non-radiative ground level manifold states. Entanglement is thus created between the final state of the colour-center and the presence of the optical excitation; in a generalized form, this can be written as (|g1,1> + lg2,0>), where g1 and g2 correspond to the two possible ground level manifold states (radiative and non-radiative, respectively) and 1 and 0 correspond to the usual fock state description of the optical field excitation. Since this form of entanglement generation does not create entanglement between the polarization degree of freedom, it is well defined and therefore can be controlled towards the free-space optical head for further transmission using any of the embodiments according to the invention.

In another embodiment, at the active optical device of any of Figs. 1A, 1B, 2A and 2B a nearly-deterministic single-photon source (such as one implemented via a quantum dot) is directed to a symmetric beam splitter such that the single-photon's wave-packet is cast into a superposition of the two spatial modes defined by the beam splitter's output modes. This dual-rail encoding does not rely once again on the polarization degree of freedom which can be arbitrarily set at a well-defined mode and can be transmitted or received using any of the embodiments according to the invention.

In another embodiment, the photonic qubits could be generated at the active optical device of any of Figs. 1A, 1B, 2A and 2B such that the center wavelength of one photon is strongly correlated with the other's, ergo frequency-bin entanglement, and can be transmitted or received using any of the embodiments according to the invention.

In an embodiment, the active optical device of any of Figs. 1A, 1B, 2A and 2B may comprise circuitry to convert polarization encoding into time-bin encoding and/or vice versa.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. An optical transmitter (100; 150) comprising:
- an active optical device (102) configured to generate a linearly polarized optical signal;
- a quarter wave plate (106; 156);
- a first polarization maintaining optical fiber (104; 154); and
- a beam expander (108) configured to transmit a circularly polarized optical signal;
wherein:
a) the first polarization maintaining optical fiber (104) is configured to pass the linearly polarized optical signal generated by the active optical device (102) to the quarter wave plate (106) and the quarter wave plate (106) is configured to convert the linearly polarized optical signal into the circularly polarized optical signal;
or
b) the quarter wave plate (156) is configured to convert the linearly polarized optical signal generated by the active optical device (102) into the circularly polarized optical signal and the first polarization maintaining optical fiber (154) is configured to pass the circularly polarized optical signal to the beam expander (108).

2. An optical receiver (200; 250) comprising:
- a beam expander (208) configured to receive a circularly polarized optical signal;
- a quarter wave plate (206; 256);
- a first polarization maintaining optical fiber (204; 254); and
- an active optical device (202) configured to process a linearly polarized optical signal;
wherein:
a) the quarter wave plate (206) is configured to convert the circularly polarized optical signal received by the beam expander (208) into the linearly polarized optical signal and the first polarization maintaining optical fiber (204) is configured to pass the linearly polarized optical signal to the active optical device (202);
or
b) the first polarization maintaining optical fiber (254) is configured to pass the circularly polarized optical signal received by the beam expander (208) to the quarter wave plate (256) and the quarter wave plate (256) is configured to convert the circularly polarized optical signal into the linearly polarized optical signal.

3. The optical transmitter (100) according to claim 1, or the optical receiver (200) according to claim 2, wherein for a) the first polarization maintaining optical fiber (104; 204) is a first birefringent optical fiber configure to transmit two modes.

4. The optical transmitter (100) or the optical receiver (200) according to claim 3, wherein the active optical device (102; 202) comprises a first polarization filter configured to filter from the linearly polarized optical signal one of the two modes of the birefringent optical fiber and/or wherein the optical transmitter (100) or the optical receiver (200) further comprises a second polarization filter connected to the beam expander (108; 208) and configured to filter from the circular polarized optical signal the one of the two modes.

5. The optical transmitter (100) or the optical receiver (200) according to claim 4, wherein the active optical device (102; 202) comprises a polarization beam splitter configured to combine or split the linearly polarized optical signal into the two modes of the birefringent optical fiber.

6. The optical transmitter according to any of claims 1, 3-5 or the optical receiver according to any of claims 2-5, wherein the quarter wave plate is a second optical birefringent fiber spliced at 45 degrees to the first polarization maintaining optical fiber and a length of said second birefringent fiber is such that the second optical birefringent fiber functions as the quarter wave plate.

7. The optical transmitter according to any of claims 1 and 3-6 or the optical receiver according to any of claims 2-6, wherein a length of the first polarization maintaining optical fiber is between one meter and 400 meters.

8. The optical transmitter according to claim 1 or the optical receiver according to claim 2, wherein for case a) the quarter wave plate is connected to the beam expander.

9. The optical transmitter according to any of claims 1 and 3-8 or the optical receiver according to any of claims 2-8, wherein the active optical device comprises one or more laser lights and/or one or more optical amplifiers and/or one or more optical detectors and/or one or more single-photon detectors.

10. A ground station or a satellite or a terrestrial optical free-space communication link comprising the optical transmitter according to any of claims 1 and 3-9 or the optical receiver according to any of claims 2-9.

11. An optical transmitting method, comprising the steps of:
III. generate (302; 352), by an active optical device (102), a linearly polarized optical signal;
IV.
c) pass (304), by a first polarization maintaining optical fiber (104) connected to the active optical device and to a quarter wave plate, the linearly polarized optical signal generated by the active optical device to the quarter wave plate, and convert (306), by the quarter wave plate (106), the linearly polarized optical signal into circularly polarized optical signal;
or
d) convert (354), by the quarter wave plate (156), the linearly polarized optical signal into the circularly polarized optical signal and pass (304), by the first polarization maintaining optical fiber (154), the circularly polarized optical signal to a beam expander; and
IV. transmit (306; 356), by beam expander (108), the circularly polarized optical signal.

12. An optical receiving method, comprising the steps of:
III. receive (402; 452), by a beam expander (208), a circularly polarized optical signal; and
IV.
c) convert (404), by a quarter wave plate (206), the circularly polarized optical signal into a linearly polarized optical signal and pass (406), by a first polarization maintaining optical fiber (204), the linearly polarized optical signal from the quarter wave plate (206) to the active optical device (202);
or
d) pass (454), by the first polarization maintaining optical fiber (254), the circularly polarized optical signal to the quarter wave plate (206) and convert (456), by the quarter wave plate (256), the circularly polarized optical signal into the linearly polarized optical signal.
